# EUROPEAN PATENT APPLICATION

(11) **EP 2 537 700 A1**
(43) Date of publication of application: **26.12.2012**
(21) Application number: 11170873.1
(22) Date of filing: 22.06.2011
(51) Int. Cl.: B60K 37/06, B60Q 1/14

(54) **User interface system, method and program for actuation of a vehicle function**

(71) Applicant: Volvo Car Corporation, 40 531 Göteborg (SE)
(72) Inventor: Lindgren, Thomas, 31058 Vessigebro (SE); Gordh, Mikael, 44250 Ytterby (SE); Agardh, Johannes, 43893 Landvetter (SE); Fagerström, Martin, 41763 Göteborg (SE)
(74) Representative: Widahl, Jenny Marie

(57) **Abstract**

The present invention relates to a user interface system (1) for allowing a user of a vehicle to actuate a vehicle function of the vehicle, which user interface system comprises a display unit (2) integrated with an instrument panel (3) of the vehicle, and a steering wheel lever (4) integrated with a steering column (5) of the vehicle. The steering wheel lever comprises a control device (6) comprising a touch sensing device (7) arranged to sense a touch occurrence of the user, and a selecting device (8). The display unit is arranged to, as a result of the touch occurrence, display a plurality of predetermined selectable functionality options (11) each associated with a respective vehicle function. Furthermore, the selecting device is arranged to provide the user with the ability to make a selection (13) of one of the functionality options. As a result of detection of the selection, the vehicle function associated with the selected functionality option is actuated.

The invention also relates to a corresponding method (S201-S207) and a computer program (15) comprising software instructions that, when executed, performs said method.

With the presented user interface system, improved user-friendly visibility of available vehicle functions, as well as control thereof, is provided.

## Description

### Technical Field

The present invention relates to a user interface system for allowing a user of a vehicle to actuate a vehicle function of the vehicle.

### Background Art

Within the automotive sector, an increased amount of functionality is constantly added to vehicle platforms. More vehicle functions become available in the vehicles, along with a variety of different options. The driver may for instance choose from a plurality of settings to suit personal preferences or specific traffic situations. With the increasing number of available features, however, comes the challenge of presenting the different options as well as activated functions to the driver in a user-friendly manner. A rather extensive amount of information needs to be presented to the driver without him or her losing focus on driving.

Regarding vehicle functions related to for instance external vehicle light or wipers, control of functionality thereof is traditionally provided on the steering wheel levers. Different options may be provided as printed symbols and the selected function indicated by the physical position of the lever. The driver is thus bound to visually confront the lever in order to interact with the different options. The more features available, the more information provided on the lever, with an obvious risk of steeling the attention of the driver.

In order to improve user-friendliness of vehicle functions related to external vehicle light, DE 10 2006 018 667 suggests a high beam assisting system of a vehicle for switching between a dim light mode and a high beam mode. A display unit provides information, for instance in a pop-up message, about the status of the high beam assisting system to a driver of the vehicle during activation or deactivation of the high beam assisting system. Accordingly, with the suggested solution, the visibility of the selected activated functionality option is improved, without the driver needing to visually confront the steering wheel lever to get feedback on the chosen vehicle function. Although DE 10 2006 018 667 improves user-friendliness, however, there is still room for improvement with regards to keeping the eyes of the driver in a forward direction rather than on the steering wheel lever during control of functionality provided thereon.

### Summary of the Invention

According to a first aspect of the invention, the above need is at least partly met by a user interface system for allowing a user of a vehicle to actuate a vehicle function of the vehicle, which user interface system comprises a display unit integrated with an instrument panel of the vehicle, and a steering wheel lever integrated with a steering column of the vehicle. The steering wheel lever comprises a control device comprising a touch sensing device arranged to sense a touch occurrence of the user, and a selecting device. The display unit is arranged to, as a result of the touch occurrence, display a plurality of predetermined selectable functionality options each associated with a respective vehicle function. Furthermore, the selecting device is arranged to provide the user with the ability to make a selection of one of the functionality options. As a result of detection of the selection, the vehicle function associated with the selected functionality option is actuated.

In presenting such a user interface system, improved user-friendly visibility of available vehicle functions, as well as control thereof, is provided.

The user referred to is preferably the driver, whereas the referred to vehicle may be any arbitrary vehicle, such as a for instance a car, truck or bus provided with a display unit integrated with an instrument panel of the vehicle and a steering wheel lever integrated with a steering column of the vehicle. The display unit may be a display specifically provided for the implementation of the suggested user interface system provided in front of the driver, or a commonly known display already available in the vehicle; for instance a dashboard display, a display of the driver information module, a cluster display etc. By integrating the display unit with the instrument panel, information to be displayed to the driver may be shown in a user-friendly manner. Even when confronted with information requiring the attention of the driver, he or she can maintain his or her gaze in a forward direction.

The referred to steering wheel lever, i.e. a steering wheel stalk control, may be integrated with the steering column in a known fashion, and in addition to novel functionality suggested by the present invention adapted to provide functionality already known in the art. For instance, the steering wheel lever may additionally cover functionality such as toggling between a high and low beam of the vehicle light provided by pushing the steering wheel lever in a known manner, as well as a flash function by pulling the same. According to the invention, the steering wheel lever comprises a control device preferably arranged to be easily reached by the driver. Such a placement may for instance be close to a distal end of the lever from the steering column, to thereby avoid the steering wheel hindering the driver from easy access to the control device. The control device comprises a touch sensing device arranged to sense a touch occurrence, e.g. manual engagement, of the user. The touch sensing device may comprise any novel and/or arbitrary touch sensor(s) known in the art enabling detection of a touch influence, such as contact initiated by a driver's finger(s), e.g. thumb. The control device furthermore comprises a selecting device, providing a means for selection made by the user. The selecting device may be represented by for instance one or several wheels, buttons or knobs, by which the e.g. driver may indicate his or her selected choice.

In order to improve visibility of vehicle functions available for selection, the display unit is arranged to, as a result of the touch occurrence, display a plurality of predetermined selectable functionality options each associated with a respective vehicle function. Accordingly, the touch sensing device provides the user with the ability to, by a simple touch of the touch sensing device, be presented with available functionality options visual in the display unit. Thereby, rather than being shown merely a functionality option associated with the currently active vehicle function, all available functionality options are shown to the user. Should more functionality options than fit into view be available, may stepping around among the functionality options result in further functionality options being visible and former being hidden. Furthermore, displaying the functionality options in the display unit provides the ability to designate more space for describing the functionality options in more detail, in text and/or graphics, as compared to printed symbols on the steering wheel lever. Additionally, by allowing the user to by his/her touch trigger visibility of the functionality options at his or her discretion, the functionality options may be visible as chosen by the user, and even for a limited time period. Thereby, there is no need to continuously making visually available the available functionality options, and the rather extensive amount of information the user may be exposed to may hence be decreased. The functionality options may be arbitrarily arranged when displayed in the display unit; preferred, however, is arranging them in a list. Thereby, the functionality options are presented to the user in a compact and easily viewable manner. The referred to vehicle functions may be represented by arbitrary vehicle functionality. According to one example, the steering wheel lever is adapted to comprise functionality related to control of external vehicle light. The functionality options may then be represented by for instance the text strings "light off", "park", "main", and "automain", with the functionality options being associated with the respective vehicle functions: turning the light off, turning on the parking light, turning on the main light, and automatically selecting main light mode as default. The functionality options may additionally or alternatively comprise icons and/or symbols further clarifying the essence of the different vehicle functions.

The referred to selecting device is arranged to provide the user with the ability to make a selection of one of the functionality options, and, as a result of detection of the selection, the vehicle function associated with the selected functionality option is actuated. Accordingly, by allowing the user to select one of the predetermined selectable functionality options to thereby trigger actuation of the corresponding vehicle function, a user-friendly manner of actuating a vehicle function is provided. The user, i.e. preferably the driver, is provided with the ability to select and subsequently activate the preferred vehicle function with his or her gaze toward the display unit, allowing him or her to a greater extent keeping focus in a forward direction. The actuation is for instance supported by a software function, with a signal comprising the detected functionality option selection as input, and activation of the corresponding vehicle function as output.

According to an embodiment, the steering wheel lever has a first side and an opposite second side. Furthermore, the steering wheel lever and/or the control device are adapted such that the control device is available to the user from both the first and the second side. Thereby, the control device is easily gripable by the e.g. driver, enabling him or her to get a firm grip thereof. The first side of the steering wheel lever is preferably, although not necessarily, facing the driver, whereby the driver may grip the control device with his or her thumb and an additional opposing finger in an ergonomical manner. With the ability to grip the control device from two sides of the steering wheel lever, different alternatives regarding sensing of a touch occurrence of the touch sensing device arises. According to one example, a touch by the user of the touch sensing device on either the first or the second side of the steering wheel lever is defined as a touch occurrence. According to another example, simultaneous touching of the touch sensing device on the first and the second side of the steering wheel lever is required in order to define the touching as a touch occurrence. In the latter case, it is to greater extent ensured that touching of the touch sensing device is not made by mistake by the user, but meant as an intended act. It should be noted that "an opposite second side" in the context of this application should be interpreted in a broad sense, likewise including "an essentially opposite second side" and/or "a close to opposite second side".

According to one embodiment, the selecting device comprises a thumbwheel. Thereby, an efficient, compact selecting device is provided, representing a feasible solution enabling the user to in an efficient manner select a preferred functionality option. Additionally, in the case of the functionality options being presented in a list, the thumbwheel represents a selecting device allowing the user to scroll among the functionality options in a logical manner.

According to another embodiment, the thumbwheel comprises a plurality of steps each representing one of the functionality options. The detection of the selection is determined based on the step to which the thumbwheel is scrolled. Thereby, a feasible solution is suggested allowing the user to scroll, i.e. for instance move focus, among the functionality options in the display unit, with the functionality option in focus resulting in the corresponding vehicle function being actuated. According to one example, the thumbwheel is indefinitely rotatable. According to another, the thumbwheel comprises a predetermined number of steps. Should more functionality options than fit into view be available, may scrolling the thumbwheel result in further functionality options being visible and former being hidden.

According to yet another embodiment, the touch sensing device is comprised in the selecting device. Thereby, a more compact control device is provided, occupying less space of the steering wheel lever. Additionally, allowing the touch sensing device to be comprised in the selecting device is more convenient for the user, with the ability to touch and select in an efficient manner.

According to one embodiment, the touch sensing device comprises at least one capacitive sensor. Thereby, a feasible solution is provided in that a capacitive sensor may detect anything which is conductive or has dielectric properties, for instance a human finger. Any arbitrary capacitive sensors, e.g. novel or already known in the art, may be utilized.

According to another embodiment, the user interface system is adapted such that, out of the functionality options displayed in the display unit, the functionality option associated with a currently active vehicle function, is emphasized. Thereby, the user may be prompted in a clear visual manner of the currently active vehicle function. Additionally, the user may at his or her own discretion, by a simple touch of the touch sensing means to display the available functionality options, determine when to be informed of the currently active vehicle function, rather than being continuously visually presented therewith. Emphasizing the currently active vehicle function in the display unit may be accomplished in any arbitrary manner drawing attention, and may for instance be represented by the corresponding functionality option being highlighted, underlined, encircled, bold and/or marked with a tick.

In general, the functionality options may be displayed in the display unit for an arbitrary period of time. According to one embodiment, however, the functionality options are displayed for a predetermined limited time. Thereby, the available functionality options will automatically vanish should the user not select a functionality option within the set limited time. According to one example, countdown of the limited time starts as the user releases the touch sensing device. Such a limited time may for instance range from 1 to 30 seconds. Alternatively, countdown of the limited time may start with detection of the initial touch occurrence.

Furthermore, in general, the functionality options may be visually displayed in the display unit in an arbitrary manner. A section of the display unit may - at least temporarily - be dedicated to visually display the functionality options. According to one embodiment, the functionality options are displayed in a pop-up window. Thereby, a feasible implementation is suggested, enabling the view of the functionality options to be adapted to characteristics chosen by the designer to greater extent. Animations and images may be utilized in combination with describing text to provide the user with a more pedagogic explanation of the different functionality options.

Traditionally, a steering wheel lever is adapted to comprise functionality related to control of external vehicle light and/or wipers of the vehicle. Consequently, according to one embodiment, the functionality options are associated with vehicle functions related to one or a combination of external vehicle light functionality and vehicle wiper functionality. Thereby, a solution providing the user with the ability to control external light and/or wiper functionality in an efficient manner is provided.

According to a second aspect of the invention, there is provided a method for a user interface system allowing a user of a vehicle to actuate a vehicle function of the vehicle, which user interface system comprises a display unit integrated with an instrument panel of the vehicle, and a steering wheel lever integrated with a steering column of the vehicle. The steering wheel lever comprises a control device comprising a touch sensing device arranged to sense a touch occurrence of the user, and a selecting device. The method comprises the steps of: sensing the touch occurrence; displaying in the display unit, as a result of the touch occurrence, a plurality of predetermined selectable functionality options each associated with a respective vehicle function; detecting a selection made by the user of one of the functionality options, where the selecting device is arranged to provide the user with the ability to make the selection; and actuating, as a result of detection of the selection, the vehicle function associated with the selected functionality option.

According to a third aspect of the invention, there is provided a computer program comprising software instructions that, when executed, performs the method of the above mentioned second aspect of the invention.

The second and third aspects of the invention provide similar advantages as discussed above in relation to the first aspect of the invention.

Other aspects, benefits and advantageous features of the present invention will be apparent from the following description and claims.

### Brief Description of the Drawings

The various aspects of the invention, including its particular features and advantages, will be readily understood from the following detailed description and the accompanying drawings, in which:
Fig. 1 illustrates an exemplifying user interface system in accordance with a preferred embodiment of the present invention; and
Fig. 2 is a flow chart reflecting exemplifying steps of a method for the user interface system of Fig. 1.

### Detailed Description of the Preferred Embodiments of the Invention

The present invention will now be described more fully hereinafter with reference to the accompanying drawings, in which the currently preferred embodiment of the invention is shown. This invention may, however, be embodied in many different forms and should not be construed as limited to the embodiment set forth herein; rather, the embodiment is provided for thoroughness and completeness, and fully convey the scope of the invention to the skilled addressee.

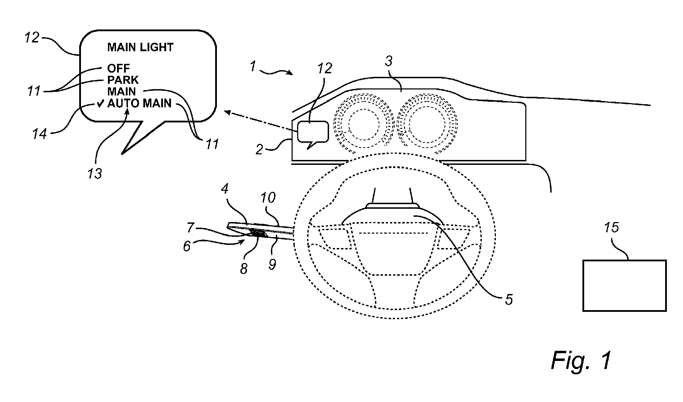

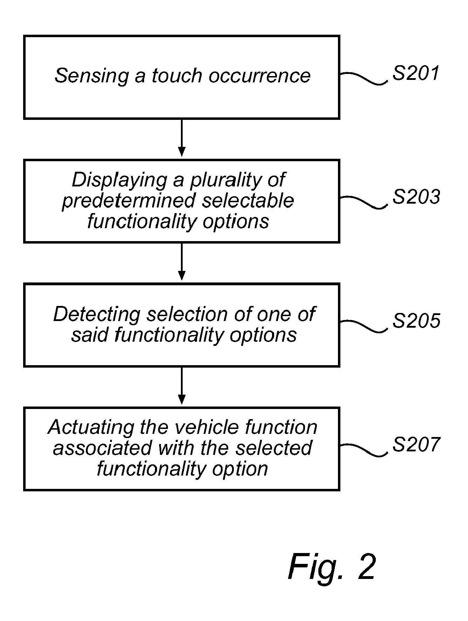

Referring now to Fig.1 in combination with Fig. 2, there is provided an exemplifying user interface system 1 in accordance with a preferred embodiment of the present invention, and a flow chart reflecting exemplifying steps of a method for the user interface system 1.

The shown user interface system 1 is provided for allowing a user of a vehicle to actuate a vehicle function of the vehicle. The vehicle is here represented by a car, and the vehicle functions of the shown embodiment concern functionality related to control of external vehicle light. In the context of this application, the user is synonymous with a driver of the vehicle; it should be noted, however, that the user may be represented by any arbitrary person.

The user interface system 1 comprises a display unit 2 integrated with an instrument panel 3 of the vehicle. Here, the display unit 2 is represented by a commonly known cluster display positioned in front of a potential driver of the vehicle. The user interface system 1 furthermore comprises a steering wheel lever 4 integrated with a steering wheel column 5 of the vehicle. The steering wheel lever 4 has a first side 9 and a second opposite side 10, which first side 9 essentially faces the potential driver. Furthermore, the steering wheel lever 4 comprises a control device 6; here arranged at the distal end of the steering wheel lever 4 from the steering column 5 to be easily reachable by the potential driver. The steering wheel lever 4 and/or the control device 6 are adapted such that the control device 6 is available to the potential driver from both the first 9 and the second side 10.

The control device comprises a touch sensing device 7 and a selecting device 8. The touch sensing device 7 is here comprised in the selecting device 8, and represented by capacitive sensors 7. The selecting device 8 is represented by a thumbwheel 8, and the capacitive sensors 7 arranged along the circumferential surface of the thumbwheel 8.

In use, the user interface system 1 provides the driver with the ability to actuate the vehicle function preferred by the driver or required for the situation at hand. In the shown embodiment, the available vehicle functions are represented by the alternatives: turning the light off, turning on the parking light, turning on the main light, and automatically selecting main light mode as default.

In order to initiate an actuation of one of the available vehicle functions, the driver touches the touch sensing device 7 - here the thumbwheel 8 - with his or her e.g. hand. The capacitive sensors 7 are thereby, in step S201, sensing a touch occurrence of the driver. Generally, touching is only required at a single section of the touch sensing device 7 in order to define the touch as a touch occurrence. Here, however, for the touch to be interpreted as a touch occurrence, touching in two separate sections of the touch sensing device 7 is required. Thereby, it is to greater extent ensured that touching of the touch sensing device 7 is not made by mistake by the driver, but meant as an intended act. In the shown embodiment, with the thumbwheel 8 being arranged to be available to the driver from both the first 9 and the second side 10 of the steering wheel lever, the driver preferably places his or her thumb on the section of the thumbwheel 8 available on the first side 9, and an opposite finger, e.g. the index finger, on the section of the thumbwheel 8 available on the second side 10. Thereby, the driver touches two separate sections of the touch sensing device 7 simultaneously, thus triggering said touch occurrence.

As a result of the touch occurrence, in step S203, a plurality of predetermined selectable functionality options 11 each associated with a respective vehicle function are displayed in the display unit 2. The functionality options 11 are here represented by the text strings "light off", "park", "main", and "automain". According to the shown embodiment, the functionality options 11 are displayed in a list in a pop-up window 12, which may be arbitrarily arranged in the display unit 2. Furthermore, here, the functionality options 11 are displayed for a predetermined limited time, for instance 30 seconds, with a countdown starting as the driver releases the touch sensing device 7. Accordingly, the available functionality options 11 automatically vanish should the driver not select a functionality option 11 within the set limited time.

In the shown embodiment, the driver is set out to activate the vehicle function "automatically selecting main light mode as default", representing main external light as default at start up. In order to do so, the selecting device 8 - here the thumbwheel 8 - is arranged to provide the driver with the ability to make the selection. The thumbwheel 8 comprises a plurality of steps each representing one of the functionality options 11. The detection of a selection 13 is determined based on the step to which the thumbwheel 8 is scrolled. In order to make said selection 13, the driver accordingly scrolls the thumbwheel 8 to the functionality option "automain" 13. Thereby, in step S205, the selection 13 made by the driver of one of the functionality options 11 is detected. Here, out of the functionality options 11 displayed in the display unit 2, the functionality option 13 associated with the currently active vehicle function, is emphasized. In the shown embodiment, the selected functionality option "automain" 13 is marked with a tick 14.

In step S207, as a result of detection of the selection 13, the vehicle function associated with the selected functionality option 13 is actuated. Accordingly, the vehicle function "automatically selecting main light mode as default" is actuated as a result of the driver selecting the functionality option "automain" 13. The actuation is for instance supported by a software function, with a signal comprising the detected functionality option selection 13 as input, and activation of the corresponding vehicle function as output. Such a software function may, along with software instruction that, when executed, perform the method steps S201-207, be comprised in a computer program 15.

By way of conclusion, according to the invention, the driver is provided with a solution offering him or her the ability to by means of the touch sensing device 7 trigger an improved visual overview of available vehicle functions, and to by means of the selecting device 8 actuate a preferred vehicle function 13 in a user-friendly manner. Accordingly, the driver is given the ability to view available functionality options 11, select a preferred functionality option 13, and subsequently activate an associated vehicle function with his or her gaze toward the display unit 2, to thereby to greater extent keep focus in a forward direction.

The present inventive concept has been described above by way of example. Several variants of the present inventive concept are, however, conceivable. For instance, the user interface system 1 may as an alternative or in addition to support functionality related to external vehicle light, be useful in implementations related to for instance wiper functionality. Furthermore, in the exemplary embodiment of the present invention described above, the selecting device 8 comprises the touch sensing device 7. It would however be possible, and within the scope of the present invention, to use a different type of control device 6 comprising a selecting device 8 and a touch sensing device 7 separately arranged.

Furthermore, even though the invention has been described with reference to a specific exemplifying embodiment thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. User interface system (1) for allowing a user of a vehicle to actuate a vehicle function of said vehicle, said user interface system (1) comprising:
- a display unit (2) integrated with an instrument panel (3) of said vehicle; and
- a steering wheel lever (4) integrated with a steering column (5) of said vehicle, said steering wheel lever (4) comprising a control device (6) comprising:
- a touch sensing device (7) arranged to sense a touch occurrence of said user; and
- a selecting device (8),
wherein said display unit (2) is arranged to, as a result of said touch occurrence, display a plurality of predetermined selectable functionality options (11) each associated with a respective vehicle function, and
wherein said selecting device (8) is arranged to provide said user with the ability to make a selection (13) of one of said functionality options;
wherein, as a result of detection of said selection (13), the vehicle function associated with the selected functionality option (13) is actuated.

2. User interface system (1) according to claim 1, wherein said steering wheel lever (4) has a first side (9) and an opposite second side (10), said steering wheel lever (4) and/or said control device (6) being adapted such that said control device (6) is available to said user from both said first (9) and said second side (10).

3. User interface system (1) according to claim 1 or 2, wherein said selecting device (8) comprises a thumbwheel.

4. User interface system (1) according to claim 2 or 3, wherein said thumbwheel (8) comprises a plurality of steps each representing one of said functionality options (11), and wherein said detection of the selection (13) is determined based on the step to which said thumbwheel (8) is scrolled.

5. User interface system (1) according to any one of the preceding claims, wherein said touch sensing device (7) is comprised in said selecting device (8).

6. User interface system (1) according to any one of the preceding claims, wherein said touch sensing device (7) comprises at least one capacitive sensor.

7. User interface system (1) according to any one of the preceding claims, wherein, out of said functionality options (11) displayed in said display unit (2), the functionality option (13) associated with a currently active vehicle function, is emphasized (14).

8. User interface system (1) according to any one of the preceding claims, wherein said functionality options (11) are displayed for a predetermined limited time.

9. User interface system (1) according to any one of the preceding claims, wherein said functionality options (11) are displayed in a pop-up window (12).

10. User interface system (1) according to any one of the preceding claims, wherein said functionality options (11) are associated with vehicle functions related to one or a combination of external vehicle light functionality and vehicle wiper functionality.

11. Method for a user interface system (1) allowing a user of a vehicle to actuate a vehicle function of said vehicle, said user interface system (1) comprising:
- a display unit (2) integrated with an instrument panel (3) of said vehicle; and
- a steering wheel lever (4) integrated with a steering column (5) of said vehicle, said steering wheel lever (4) comprising a control device (6) comprising:
- a touch sensing device (7) arranged to sense a touch occurrence of said user; and
- a selecting device (8),
said method comprising the steps of:
- sensing (S201) said touch occurrence;
- displaying (S203) in said display unit (2), as a result of said touch occurrence, a plurality of predetermined selectable functionality options (11) each associated with a respective vehicle function;
- detecting (S205) a selection (13) made by said user of one of said functionality options, said selecting device (8) being arranged to provide said user with the ability to make said selection (13); and
- actuating (S207), as a result of detection of said selection (13), the vehicle function associated with the selected functionality option (13).

12. Computer program (15) comprising software instructions that, when executed, performs the method of claim 11.
